# EUROPEAN PATENT APPLICATION

(11) **EP 4 246 198 A1**
(43) Date of publication of application: **20.09.2023**
(21) Application number: 22162193.1
(22) Date of filing: 15.03.2022
(51) Int. Cl.: G02B 6/42, G02B 6/44, B65H 49/32, G02B 6/38, H02G 11/02, H04Q 1/02, H05K 7/14

(54) **REEL HOLDER ASSEMBLY FOR AN AVIONICS ENCLOSURE, FIBRE REEL ASSEMBLY, ENCLOSURE, AND MANUFACTURING METHOD**

(71) Applicant: Tyco Electronics UK Ltd, Wiltshire SN3 5HH (GB)
(72) Inventor: EYLES, Jonathan Mark, Dorcan (GB); KOPINSKI, Thomasz, Dorcan (GB); COOPER, Gary, Dorcan (GB)
(74) Representative: Grünecker Patent- und Rechtsanwälte PartG mbB

(57) **Abstract**

The present disclosure relates to a reel holder assembly (1) for an avionics enclosure, the reel holder assembly having a front side, a rear side, an upside and a downside. The avionics enclosure comprises a reel holder (2) comprising at least one channel (21) defined by two ribs (22) for guiding a ribbon cable, the channel (21) extending from the front side to the rear side, wherein each rib comprises first fixing means (25) for engaging with a fibre reel assembly (4). The avionics enclosure further comprises a reel holder foam pad (3) fixed to a downside surface of the reel holder (2), wherein the downside surface can be mounted to the avionics enclosure.

## Description

The present invention relates to a reel holder assembly for an avionics enclosure, and further relates to a fibre reel assembly for engaging with the reel holder assembly, an enclosure and a method of manufacturing the enclosure.

In the field of avionics, distributed packaging systems exist for providing electric and optical interconnection and routing. A distributed avionics system creates flexible capabilities in a smaller, lighter package. Standardized modules can be deployed through an aircraft, allowing information to be collected and distributed around a fiber optic or copper backbone. Avionic hardware requires putting increasing computing power into smaller packages at lower costs. The ability to interconnect small-form-factor electronic devices, either directly or over a network, enables distributed systems that replace traditional centralized systems.

With the increasing demand and complexity of modern electronic systems in high reliability applications such as military and aerospace, there is a continuing need to incorporate more electronic equipment into a confined space, while at the same time ensuring reliability in harsh environments.

Aircaft depend increasingly on digital electronics for information and control. The trend toward MEA (more electric aircraft) highlights the transition from mechanical systems to electronically controlled systems. As the electronics content in both aircraft operation and passenger amenities continues to grow, so do the processing loads. Embedded computers are evolving to allow ever-increasing sophistication in flight sensors and radar. Distributed processing-moving the processing power from a centralized location to the point of use-still requires communication between boxes.

Conventional avionic packaging, in other words enclosures, present the problem that they lead to rapid failure under dynamic conditions.

There is therefore a need for improving avionic packaging in order to overcome or diminish the drawbacks associated with existing systems.

The present invention is defined by the independent claims. Advantageous embodiments of the present invention are defined by the dependent claims.

The present invention is based on the idea that by providing an avionics packaging comprising a reel holder assembly comprising a reel holder with channels for aligning ribbon cables and a reel holder foam pad for clamping a fibre patch sheet and fibre reel assemblies engaged with the channels, it is possible to support the routing and management of fibre optic cables within an internal enclosure envelope, ensuring that minimum fibre bend radii are not contravened and cables are sufficiently constrained to withstand aircraft shocks and vibration, while minimizing the risk of fibre damage during assembly by facilitating a controlled build process. The invention also accommodates the potential for repair of individual fibre ribbons in the event damage occurs and allows an arrangement to manage each of the individual fibres independently of their length.

The solution allows to manage a fibre patch and fibre ribbon cables between the patch sheet and connector modules. It avoids that the internal fibre optics is exposed to shock and vibration loads. Given the potential impact of damage, a solution is needed been devised to support and constrain the fibres exiting the patch sheet and provide protection against operational vibration. The solution also facilitates a controlled assembly process to ensure that fibres are handled carefully during assembly and bend radii are not contravened. However, if repair of individual ribbon cables is required, the solution allows for a level of adjustment to accommodate variation in ribbon cable length.

Increasing data rates and bandwidth requirements require using fibre optics as a method of delivering high-speed protocols over longer distances. To support the efficient transfer of data between equipment, junction boxes are required at intermediate locations to manage fibre routing. The enclosure may be an ARINC836 enclosure. The ARINC836 standard is published by Aeronautical Radio Incorporated, ARINC, on June 22, 2012. The ARINC836 enclosure outlines an enclosure design, for the housing of electronics, to perform various computing functions. This enclosure design has also been earmarked to perform the function of a junction box to support routing of fibre optic cables between aircraft equipment. For example an ARINC836 enclosures may perform the function of these junction boxes.

Fibre optic cables provide three key benefits over copper wire. The benefits include reduced size and weight, EMI immunity, increased transmission speeds and greater bandwidth over long distances. It is important to ensure that the optical cables are carefully handled to avoid that they are susceptible to damage and difficult to maintain. The impact of damage is significant in the commercial aircraft industry as regular repair and maintenance cycles are extremely costly and, equipment failure is possible. To minimize the risk of damage during assembly and in service, it is critical to ensure optical fibres are managed and constrained adequately.

The solution allows to manage the fibre patch and fibre ribbon cables between the patch sheet and connector modules, supporting the internal fibre optics so that they are not exposed to shock and vibration loads.

Given the potential impact of damage, a solution has been devised to support and constrain the fibres exiting the patch sheet and provide protection against operational vibration.

In particular, the present invention provides a reel holder assembly for an avionics enclosure, the reel holder assembly having a front side, a rear side, an upside and a downside and comprising a reel holder comprising at least one channel defined by two ribs for guiding a ribbon cable, the channel extending from the front side to the rear side, wherein each rib comprises first fixing means for engaging with a fibre reel assembly, a reel holder foam pad fixed to a downside surface of the reel holder, wherein the downside surface can be mounted to the avionics enclosure.

According to an advantageous example, the avionics enclosure may be for a distributed system. The enclosure may also be called packaging. The enclosure may also be referred to as internal enclosure envelope e.g. a standard ARINC836 enclosure envelope, an avionics packaging or a modular avionics packaging for a distributed system or a distributed integrated modular avionics packaging for aerospace and space applications or for military applications.

Advantageously, the channels allow controlling the routing of the optical fibres contained in the ribbon cables. The channels for guiding the ribbon cables ensure that the fibre optic cables are sufficiently constrained to withstand aircraft shocks and vibration. Advantageously, this solution supports the routing and management of fibre optic cables within the enclosure.

Advantageously, the solution ensures that optical fibres enter and exit the enclosure at defined connector positions. For example optical cables, routed from different locations around an aircraft, may enter the enclosure, e.g. a standard ARINC836 enclosure, via a standard EN4165 5-bay connector interface and ten fibre optic module halves. ARINC836 and EN4165 are standards used in the avionics industry.

According to an advantageous example, two module components can be installed in each of 5 connector cavities of a 5-bay connector, therefore each 5-bay connector shell can house 10 fibre optic module halves. Module components may be referred to as module halves.

Twenty-four optical fibres may terminate within each module component. Terminated fibres exiting the module components within the enclosure may come together as a collection of ribbon cables. Two ribbon cables, each containing twelve optical fibres, may exit each module component. A total of twenty ribbon cables extend from the module halves and are terminated along one edge of a fibre patch sheet.

Advantageously, when the reel holder assembly is located and secured in the lower enclosure the reel holder foam pad fixed to a downside surface of the reel holder can clamp a fibre patch sheet positioned in a base of the lower enclosure and constrain fibre patch sheet movement in the vertical direction.

According to an advantageous example, the width of each channel may accommodate a width of a ribbon cable. Advantageously, before the reel holder assembly is lowered into position for fixation, two ribbon cables exiting the rear of the lower enclosure may be aligned with each of the channels in the reel holder assembly i.e. two ribbon cables per channel. As a result, one of the ribbon cables in the channel is positioned directly above the other. The two ribbon cables may terminate in a module component in this arrangement and may also enter/exit the fibre patch sheet in this arrangement to aid fibre routing.

Once the reel holder assembly has been secured, the two ribbon cables are aligned within the channels by the ribs on the reel holder which may be brought into contact with the base of the lower enclosure. These features allow aligning ribbon cables for the next stage of the assembly process. They also provide support for reel holder legs and protect against damage caused by mishandling. The ribs may also be referred to as protruding features protruding from a downside surface of the real holder assembly.

Advantageously, initially a fibre reel assembly may be installed in the first fixing means positioned closest to the front side of the enclosure i.e. of a lower enclosure. Once the module has been secured, the fibre reel assembly may be lifted from the furthest forward position i.e. closest to the front side of the reel holder assembly, and moved backwards i.e. to engage with first fixing means closer to the rear side of the enclosure, to constrain an unsupported fibre ribbon cable length if any exists. This adjustment accommodates the potential for repair of individual fibre ribbons in the event damage occurs. If module halves need to be re-terminated, the design can cope with the resultant ribbon cable length variation without impacting routing negatively.

According to an advantageous example, the reel holder foam pad has a low compression strength. In other words, the reel holder foam pad has a compression strength that allows to compress a large distance for a small, applied pressure to minimize the loads subjected to the fibre optics. According to an advantageous example, the reel holder foam pad can be compressed to 50% of its uncompressed height with a pressure of less than 1MPa.

According to an advantageous example, the reel holder foam pad is fixed permanently to the reel holder using adhesive.

According to an advantageous example, the first fixing means comprise annular snap joints. According to an advantageous example, the first fixing means have a diameter of 3.2 mm. According to an advantageous example, the first fixing means have a diameter of 3.1 mm. The annular snap joints may also be referred to as form-fitting joint or depressions e.g. undercuts. The first fixing means may be referred to as slots. The first fixing means are designed to engage with second fixing means of the fibre reel assembly.

According to an advantageous embodiment, the reel holder assembly comprises ten channels for engaging with ten reel fibre assemblies. Advantageously, twenty ribbon cables exiting the rear side of a downside enclosure are aligned with the ten channels in the reel holder assembly i.e. two ribbon cables per channel.

According to an advantageous embodiment, the first fixing means comprise a plurality of fixing elements arranged along the channel for positioning of the fibre reel assembly in a plurality of different discrete positions with a spacing between each other.

According to an advantageous embodiment, the first fixing means comprise eight first elements for positioning respectively each of the fibre reel assembly in six discrete positions with a spacing between each other. According to an advantageous example, the eight first fixing means allow to position the fibre reel assembly in six discrete positions with a spacing of 4mm between each position.

According to an advantageous embodiment, the first fixing means comprise snap means that narrow their width at a point of entry of a fibre reel assembly. Advantageously, these features serve to lightly retain the fibre reel assembly within the reel holder assembly and prevent it from being dislodged during the fibre assembly process.

According to an advantageous embodiment, a fibre reel assembly for engaging with the reel holder assembly described above, the fibre reel assembly comprises a locating reel component secured to a rotating reel component and second fixing means for engaging with the first fixing means of the reel holder assembly.

The locating reel component may be referred as locating reel half and the rotating reel component may be referred as rotating reel half.

According to an advantageous example, the second fixing means are placed on the locating reel component.

According to an advantageous example, the second fixing means are cylindrical protrusions designed to engage in the annular snap joints of the reel holder channels. According to an advantageous example the second fixing means are cylindrical protrusions having a 3mm diameter, designed to engage in the annular snap joints of the reel holder channels. However other diameters for the cylindrical protrusions are possible.

According to an advantageous example, at least one second fixing means is placed on a side of the locating reel component to be secured to the rotating reel component and another second fixing mean is located on a side of the locating reel component facing the enclosure, each to engage with a first fixing means of each of the two ribs defining a channel.

According to an advantageous embodiment, the fibre reel assembly comprises a reel foam cushion between the locating reel component and the rotating reel component.

Advantageously, the reel foam cushion provide damping of the internal optics against shocks and vibration. The fibre reel assembly foam cushion also provides damping of the internal optics against shocks and vibration.

Advantageously, a peripheral region of the reel foam cushion is positioned on a surface of the fibre reel assembly arranged to contact a ribbon cable. Advantageously, the peripheral region of the reel foam cushion is used to locate, maintain bend radii, and provide damping of fibres under vibration.

According to an advantageous embodiment, the reel foam cushion is inserted in the locating reel component. According to an advantageous example, the locating real component and the rotating reel component are secured together by means of a snap feature of the rotating reel component inserted into a hole on the locating reel component, which constrains the reel foam cushion.

According to an advantageous embodiment, the fibre reel assembly comprises an axis of rotation for rotation of the rotating reel component relative to the locating reel component, the rotation creating a gap between surfaces of the locating reel component and the rotating reel component.

According to an advantageous example, the fibre reel assembly snap feature provides the axis of rotation.

According to an advantageous example, the rotation of the rotating reel component is through thirty degrees relative to the locating reel component.

According to an advantageous example, the created gap between the surfaces of the locating reel component and the rotating reel component is approximately a 1.2 mm gap.

According to an advantageous embodiment, the rotating reel component comprises a slot for controlling a degree of rotation of the rotating reel component and the locating reel component comprises a cylindrical protrusion for functioning as rotation stop surface.

According to an advantageous embodiment, the fibre reel assembly comprises a protruding arm on the rotating reel component for pinching and pulling vertically. Advantageously, the protruding arm can be pinched with two fingers and pulled vertically to aid the process of rotating the rotating reel component relative to the locating reel component.

According to an advantageous embodiment, a detent protrusion on the rotating reel component is located in a depression on the locating reel component. Advantageously, this provides a retention when the fibre reel assembly is closed a to prevent the rotating reel component from opening as a result of the load exerted by a fibre twist.

According to an advantageous embodiment, a radius of the reel foam cushion and the surface of the rotating reel component arranged to contact the ribbon cable are predetermined to ensure that the minimum bend radii of the fibres are not contravened, when fibre cables remain in contact around the diameter of the reel foam cushion.

The solution facilitates a controlled assembly process to ensure that fibres are handled carefully during assembly and bend radii are not contravened. It allows to manage fragile fibers without damage while ensuring a robust and dynamic arrangement.

According to an advantageous embodiment, an enclosure comprises the reel holder assembly disclosed above and comprises at least one fibre reel assembly disclosed above, secured in the at least one channel of the reel holder assembly by engagement of the first fixing means of the reel holder assembly with the second fixing means of the fibre reel assembly.

Advantageously, the solution allows for distributed processing moving the processing power from a centralized location to the point of use. The enclosure performs the function of a junction boxes placed at intermediate locations to manage fibre routing, to support the efficient transfer of data between equipment.

According to an advantageous example, the enclosure is an ARINC836 enclosure i.e. is within the ARINC836 standard outlines, for the housing of electronics, to perform various computing functions. The enclosure may also be earmarked to perform the function of a junction box to support routing of fibre optic cables between aircraft equipment. According to an advantageous example, the enclosure may be referred as an avionics packaging, a distributed integrated modular avionics packaging for aerospace and space applications or for military applications. The invention supports the routing and management of fibre optic cables within the internal enclosure envelope. The design ensures that cables are sufficiently constrained to withstand typical aircraft shocks and vibration.

Advantageously, the solution supports and constrains the optical fibres and provides protection against operational vibration. It allows to manage the fibre ribbon cables so that the internal fibre optics are not exposed to shock and vibration loads.

According to an advantageous embodiment, the enclosure further comprises an upper enclosure and a lower enclosure comprising a base.

Advantageously, the solution allows management of fibre optic cables within an internal enclosure envelope e.g. an ARINC836 enclosure, ensuring that minimum fibre bend radii are not contravened and cables are sufficiently constrained to withstand typical aircraft shocks and vibration.

According to an advantageous embodiment the enclosure further comprises a foam pad fixed to the upper enclosure, the foam pad having a predetermined thickness such that it provides damping of the internal optics of the ribbon cable against shocks and vibration upon the upper enclosure being secured.

Advantageously, when all fibre reel assemblies have been installed and positions adjusted appropriately, the upper enclosure may be installed. When secured, the flat surfaces on top of the fibre reel assemblies compress the rectangular foam pad. This removes clearance between the assembled components and provides clamping of the fibre reel assemblies. The thickness of the foam pad may be such that it does not clamp fibres wrapped around the fibre reel assemblies. Advantageously, foam components provide damping of the internal optics against shocks and vibration.

According to an advantageous embodiment, the thickness of the foam pad is such that it does not clamp fibres wrapped around the fibre reel assemblies while providing damping of the internal optics against shocks and vibration upon the upper enclosure being installed. According to an advantageous example, the thickness of the pad may be between 1.5 and 2 mm. According to an advantageous example, there is an interference of <0.5mm between the foam pad and fibre reel assembly which avoids clamping of fibres located on the reel assembly.

According to an advantageous embodiment, the enclosure further comprises a fibre patch sheet for jacketing ribbon cables, located in the base of the lower enclosure.

According to an advantageous example, the fibre patch sheet for jacketing ribbon cables, located in a base of the lower enclosure, remains constrained in lateral movement. Jacketing may also be referred to as enclosing. An advantage deriving from this solution is that when the reel holder assembly has been secured, the reel holder foam pad clamps the fibre patch sheet and constrains fibre patch sheet movement in the vertical direction.

Another advantage is that the ribbon cables may extend from the module halves and terminate along one edge of a fibre patch sheet. The patch sheet allows controlling the routing of the fibres and can be configured to ensure fibres enter and exit the enclosure at defined connector positions.

Advantageously, the patch sheet controls the routing of the fibres and can be configured to ensure fibres enter and exit the enclosure at defined connector positions. According to an advantageous example, optical cables, routed from different locations around an aircraft, may enter the enclosure via an 5-bay connector interface and ten fibre optic module components. Twenty four optical fibres may terminate within each module component. Terminated fibres exiting the module components within the enclosure come together as a collection of ribbon cables. Two ribbon cables, each containing twelve fibres, exit each module component. A total of twenty ribbon cables extend from the module components and are terminated along one edge of a fibre patch sheet.

According to an advantageous example, the fibre patch sheet is arranged so that upon use, the ribbon cables extend out from an edge of the fibre patch sheet furthest from a front side of the lower enclosure, remaining aligned within the channels of the reel holder assembly which is in contact with the base of the lower enclosure.

According to an advantageous example, the fibre patch sheet is provided with cut-outs that locate the fibre patch sheet in the base of the enclosure. According to an advantageous example the cut-outs correspond to PCB enclosure bosses that locate the fibre patch sheet in the base of the enclosure and constrain the lateral movement. Advantageously, the fibre patch sheet can be secured within the enclosure avoiding failure under dynamic conditions. The solution allows to manage the fibre patch and fibre ribbon cables between the patch sheet and connector modules. With the solution the internal fibre optics are not exposed to shock and vibration loads.

According to an advantageous embodiment, the reel holder assembly is secured in the base of the lower enclosure by third fixing means such that the reel holder foam pad clamps the fibre patch sheet.

Advantageously, the third fixing means are arranged to fix the reel holder assembly in the lower enclosure such that the reel holder foam pad clamps the fibre patch sheet and constrains its movement in the vertical direction. Advantageously, when the reel holder assembly has been secured, the reel holder foam pad clamps the fibre patch sheet and constrains sheet movement in the vertical direction. According to an advantageous example, the third fixing means locate and secure the reel holder assembly is in the lower enclosure comprise PCB fixation holes and M3 screws. According to an advantageous example, four screws may be provided.

According to an advantageous embodiment, the reel holder assembly comprises eight first fixing means to allow the fibre reel assembly to be positioned in six discrete positions with a spacing between each position. Advantageously, this enables installation with differing fibre lengths and also to allow re-positioning of reel assemblies if modules need to be cut and re-terminated. According to an advantageous example, the spacing is 4mm. Advantageously, the fibre reel assembly may be installed in the position closest to the front face of the lower enclosure in the first stage of the process. Advantageously, once the module has been secured, the fibre reel assembly can be lifted from the furthest forward position and moved backwards to constrain the unsupported fibre ribbon cable length if there is any.

According to an advantageous embodiment, the enclosures comprises at least one module component associated to two ribbon cables for being lifted around a rear side of the fibre reel assembly and inserted between the gap. According to an advantageous example, the fibres exiting from the fibre patch sheet may be terminated in module components.

Advantageously, the module component and associated ribbon cables, located in the applicable reel holder channel, can be lifted around the rear side of the fibre reel assembly and inserted between the gap. The two ribbon cables may be located in a locating reel component groove. To insert the module component into the gap, the rotating reel component may be displaced in the direction of the axis, in relation to the locating reel component.

According to an advantageous example, the module component is a EN4165 module component. EN4165 is a standard published by the German Institute for Standardisation, DIN, on July 1, 2017. According to an advantageous example, after the module component and associated two ribbon cables has been lifted around a rear side of the fibre reel assembly, it is inserted between the gap, the two ribbon cables remaining located in a locating reel component groove and the module positioned in the gap between the fibre reel assembly and a connector shell.

According to an advantageous embodiment, the reel holder assembly comprises ten channels and the fibre patch sheet enclose twenty ribbon cables aligned within the ten channels, each channel enclosing two ribbon cables one fitted above the other.

Advantageously, the twenty ribbon cables exiting the rear of the lower enclosure are aligned with the ten channels in the reel holder assembly i.e. two ribbon cables per channel. Given that the width of each channel accommodates one ribbon cable width, one of the ribbon cables in each channel is positioned directly above the other. Advantageously the two ribbon cables are terminated in the module component in this arrangement and also enter/ exit the fibre patch sheet in this arrangement to aid fibre routing. Once the reel holder assembly has been secured, the ribbon cables are enclosed within each channel on the reel holder, brought into contact with the base of the lower enclosure.

Advantageously, the solution accommodates fibre ribbon cables exiting ten EN4165 module components installed within a 5-bay connector shell. However, any other number of channels is possible and it could be scaled for enclosures of varying size/ geometry and connectors with different fibre spacings/ arrangements.

The present invention further relates to a method of assembling the avionics enclosure, the method comprising the following steps:
- positioning the fibre patch sheet jacketing the at least two ribbon cables on the base of the lower enclosure, the two ribbon cables remaining extending from an edge of the fibre patch sheet furthest from a front face of the lower enclosure;
- positioning the at least two ribbon cables extending out from a rear end of the lower enclosure, aligned within the at least one channel in the reel holder assembly;
- locating and securing the reel holder assembly described above the lower enclosure such that the reel holder foam pad clamps the fibre patch sheet;
- once the reel holder assembly has been secured, the ribbon cables remain within the at least one channel on the reel holder;
- securing a first fibre reel assembly described above in the at least one channel of the reel holder assembly by inserting the second fixing means on the locating reel component into the first fixing means of the reel holder assembly.

According to an advantageous example, the locating and securing the reel holder assembly in the lower enclosure is done by using PCB fixation means such that the reel holder foam pad clamps the fibre patch sheet and constrains the fibre patch sheet movement in the vertical direction.

According to an advantageous example, when the reel holder assembly has been secured, the ribbon cables remain within the at least one channel on the reel holder which are brought into contact with the base of the lower enclosure.

Advantageously, the fibre patch is secured within the enclosure avoiding failure under dynamic conditions. The solution allows to manage the fibre patch and fibre ribbon cables between the patch sheet and connector modules. The internal fibre optics are not exposed to shock and vibration loads. The solution also facilitates a controlled build process to ensure that fibres are handled carefully during assembly and bend radii are not contravened.

Advantageously, the two ribbon cables enter or exit the fibre patch sheet in this arrangement to aid fibre routing.

The solution allows to support and constrain the fibres exiting the patch sheet and provide protection against operational vibration. The solution also facilitates a controlled assembly process to ensure that fibres are handled carefully during assembly and bend radii are not contravened. If repair of individual ribbon cables is required, the solution allows for a level of adjustment to accommodate variation in ribbon cable length.

According to an advantageous embodiment, following securing of at least one first fibre reel assembly in the reel holder assembly, the method comprises the following steps:
- rotating the rotating reel component relative to the locating reel component, the fibre reel assembly snap detail providing the axis of rotation, the rotation creating a gap between the surfaces of the locating reel component and rotating reel component;
- lifting a module component comprising two associated ribbon cables, located in the at least one reel holder channel, around a rear of the fibre reel assembly and inserting it between the gap;
- rotating the module component inducing a twist in the two ribbon cables and inserting it into an associated connector bay;
- rotating the rotating reel component in the opposite direction to close the fibre reel assembly and secure the fibre ribbon cables within;
- when the first fibre reel assembly has been secured, installing the upper enclosure so that when secured, flat surfaces on top of the fibre reel assembly compress the rectangular foam pad.

According to an advantageous example, the rotating reel component is through thirty degrees relative to the locating reel component. According to an advantageous example, the rotation creates a gap of approx. 1.2 mm between the surfaces of the locating reel component and rotating reel component;

According to an advantageous example, after lifting the module component and inserting it between the gap, the two ribbon cables remaining located in a locating reel component groove and the module component positioned in the gap between the fibre reel assembly and a connector shell.

According to an advantageous example, rotating the module component induces a 90-degree twist.

According to an advantageous example, the rotating the rotating reel component in the opposite direction is a thirty degrees rotation in the opposite direction.

According to an advantageous example, following installation of at least one first fibre reel assembly in the reel holder assembly, rotating the rotating reel component relative to the locating reel component, the fibre reel assembly snap detail providing the axis of rotation, the rotation creating a gap between the surfaces of the locating reel component and rotating reel component Advantageously, the solution support and constrain the fibres exiting the patch sheet and provide protection against operational vibration. The solution also facilitates a controlled build process to ensure that fibres are handled carefully during assembly and bend radii are not contravened. However, if repair of individual ribbon cables is required, the solution allows for a level of adjustment to accommodate variation in ribbon cable length.

According to an advantageous example, the module is an EN4165 module.

According to an advantageous example, the rotation is controlled by means of a slot in the rotating reel component and cylindrical protrusions on the locating reel component functioning as rotation stop surfaces.

According to an advantageous embodiment, after rotating the rotating reel component thirty degrees in the opposite direction, the method comprises the step of:
- moving the at least one fibre reel assembly from one of the first fixing elements to another first fixing element closer to the rear side to constrain unsupported fibre ribbon cable length; and/or
- repeating the fibre reel assembly process in all the channels; and/or
- when all the fibre reel assemblies have been installed, installing the upper enclosure.

According to an advantageous example, the solution allows the fibre reel assembly to be positioned in six discrete positions with a predetermined spacing of 4mm between each position. Advantageously, the solution allows for a level of adjustment to accommodate variation in ribbon cable length.

According to an advantageous embodiment, after rotating the rotating reel component thirty degrees in the opposite direction, the method comprises the step of:
- providing a retention when the fibre reel assembly is closed by a detent protrusion on the rotating reel component located in a small depression on the locating reel component to prevent the rotating reel component from opening as a result of the load exerted by the fibre twist; and/or
- once the module has been secured, lifting the fibre reel assembly from the furthest forward position and moving it backwards to constrain the unsupported fibre ribbon cable length by using the slots allowing the fibre reel assembly to be positioned in discrete positions with a predetermined spacing between each position; and/or
- repeating the fibre reel assembly process in the adjacent channels until fibre reel assemblies are installed in all the channels; and/or
- when the first fibre reel assemblies has been installed, installing the upper enclosure.

According to an advantageous embodiment, wherein the step of positioning the at least two ribbon cables extending out of the rear end of the lower enclosure, aligned with the at least one channel comprises positioning twenty ribbon cables exiting the rear end of the lower enclosure aligned with ten channels in the reel holder assembly, wherein in each channel one of the two ribbon cables is positioned above the other.

According to an advantageous embodiment, a first fibre reel assembly is installed in the channel furthest to the right or to the left when viewing the reel holder assembly from the front face of the lower enclosure, and the fibre reel assembly described above are repeated in remaining nine adjacent channels until all channels are installed with a fibre reel assembly.

The accompanying drawings are incorporated into the specification and form a part of the specification to illustrate several embodiments of the present invention. These drawings, together with the description serve to explain the principles of the invention. The drawings are merely for the purpose of illustrating the preferred and alternative examples of how the invention can be made and used, and are not to be construed as limiting the invention to only the illustrated and described embodiments. Furthermore, several aspects of the embodiments may form-individually or in different combinations-solutions according to the present invention. The following described embodiments thus can be considered either alone or in an arbitrary combination thereof. Further features and advantages will become apparent from the following more particular description of the various embodiments of the invention, as illustrated in the accompanying drawings, in which like references refer to like elements, and wherein:
- **FIG. 1**: is a schematic perspective of a reel holder assembly of the present invention;
- **FIG. 2**: is an expanded perspective of the reel holder assembly of Fig. 1, comprising a reel holder and a reel holder foam pad of the invention;
- **FIG. 3**: is a schematic perspective of a fibre reel assembly of the present invention;
- **FIG. 4**: is an expanded view of the fibre reel assembly of Fig. 3.
- **FIG. 5**: shows a schematic perspective of an upper enclosure with the rectangular foam pad of the present invention;
- **FIG. 6**: is an expanded view of the upper enclosure of Fig. 5.
- **FIG.7**: shows an expanded view of a lower enclosure and a fibre patch sheet of the invention.
- **FIG. 8**: shows a schematic perspective of the lower enclosure with the reel holder assembly of the present invention;
- **FIG. 9**: shows a schematic perspective of the lower enclosure with the reel holder assembly and a fibre reel assembly of the present invention;
- **FIG. 10**: is a detail of a fibre reel assembly engaged with the reel holder assembly of the present invention;
- **FIG. 11**: shows a detail of the reel holder assembly and a fibre reel assembly of the present invention;
- **FIG. 12**: is another detail of a fibre reel assembly and the reel holder assembly of the present invention;
- **FIG. 13**: is a schematic representation of the lower enclosure of the present invention, showing assembled reel holder assembly and fibre reel assemblies of the present invention;
- **FIG. 14**: is a detail of the enclosure of the present invention with the lower enclosure and the upper enclosure installed.

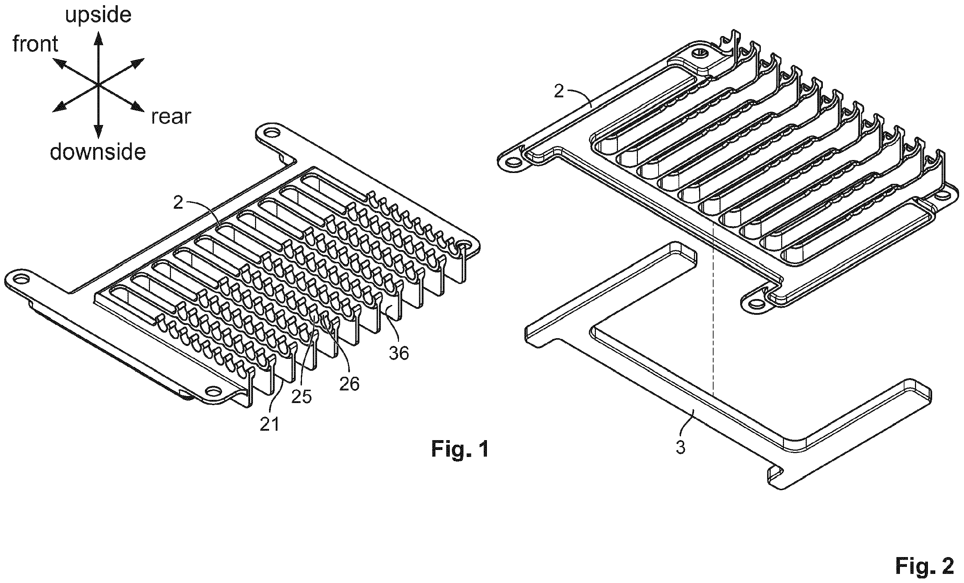

The present invention will now be explained in more detail with reference to the Figures and firstly referring to Fig. 1.

Fig. 1 is a view of the reel holder assembly 1 showing its upside surface. The axis shows the upside, downside, frontside and rearside of the real holder assembly.

The Figure shows exemplarily ten channels 21 defined by ribs 36 extending from the frontside to the rearside. The Figure does not show the reel holder foam pad fixed to the downside surface of the real holder assembly.

The first fixing means 25 may comprise snap means 26 that narrow their width at a point of entry of a fibre reel assembly.

Fig. 2 shows an exploded view of the reel holder assembly of Fig. 1, showing a downside of the reel holder 2 and a the reel holder foam pad 3. The reel holder foam pad 3 may be fixed permanently to the downside surface of the reel holder 2 using for example adhesive. The holder foam pad may be of a low compression strength.

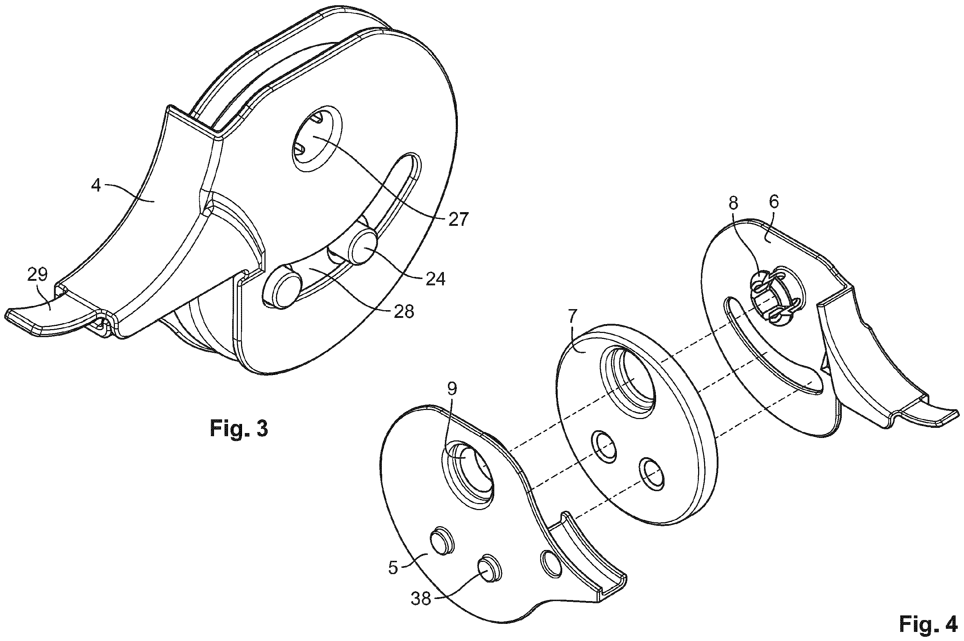

Fig. 3 shows a view of a fibre reel assembly 4 comprising three assembled parts: a locating reel component 5, a rotating reel component 6 and a reel foam cushion 7. The locating reel component 5 and rotating reel component 6 may be referred to as locating reel half 5 and rotating reel half 6 respectively. The reel foam cushion may have a low compression strength that can compress to 50% with a pressure of less than 1MPa. Exemplarily, the compression strength of the reel foam cushion may be similar to the compression strength of the foam pad. Exemplarily, the material of the reel foam cushion may be the same material as the one of the foam pad.

Fig. 4 shows an exploded view of the reel holder assembly of Fig. 3. It shows, the locating reel component 5, the reel foam cushion 7 and the rotating reel component 6. The Figure shows that the reel foam cushion 7 may be inserted on the locating reel component 6. The two reel components may be secured together by inserting flexible snap features 8 on the rotating reel component into a hole 9 on the locating reel component, constraining the reel foam cushion 7 in the process.

Figs. 3 and 4 show that the locating real component 5 and the rotating reel component 6 may be secured together by means of a snap feature 8 of the rotating reel component inserted into a hole 9 on the locating reel component, which constrains the reel foam cushion.

Second fixing means 24, 38 on the locating reel component for engaging with the first fixing means 25 of the reel holder assembly are shown.

Figs. 3 and 4 show that a fibre reel assembly snap feature 8 may provide an axis of rotation 27 for rotation of the rotating reel component 6 relative to the locating reel component 5. A slot 28 in the rotating reel component may control a degree of rotation of the rotating reel component and a cylindrical protrusion on the locating reel component may function as rotation stop surface. It shows that the rotating reel component 6 may comprise a protruding arm 29 for pinching and pulling vertically.

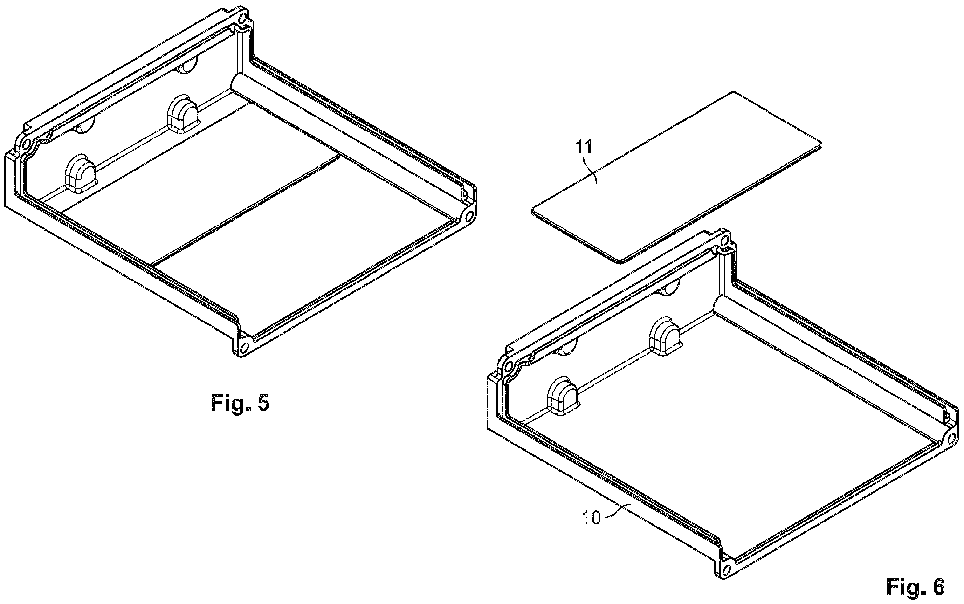

Fig. 5 shows a view of the upper enclosure 10 of the enclosure of the present invention. It shows a foam pad 11 fixed to the upper enclosure 10. The avionics enclosure may also be referred as enclosure for a distributed system or an enclosure for military or spacecraft (e.g., satellite) application.

Fig. 6 shows an exploded view of the lower enclosure with the foam pad 11 of Fig. 5.

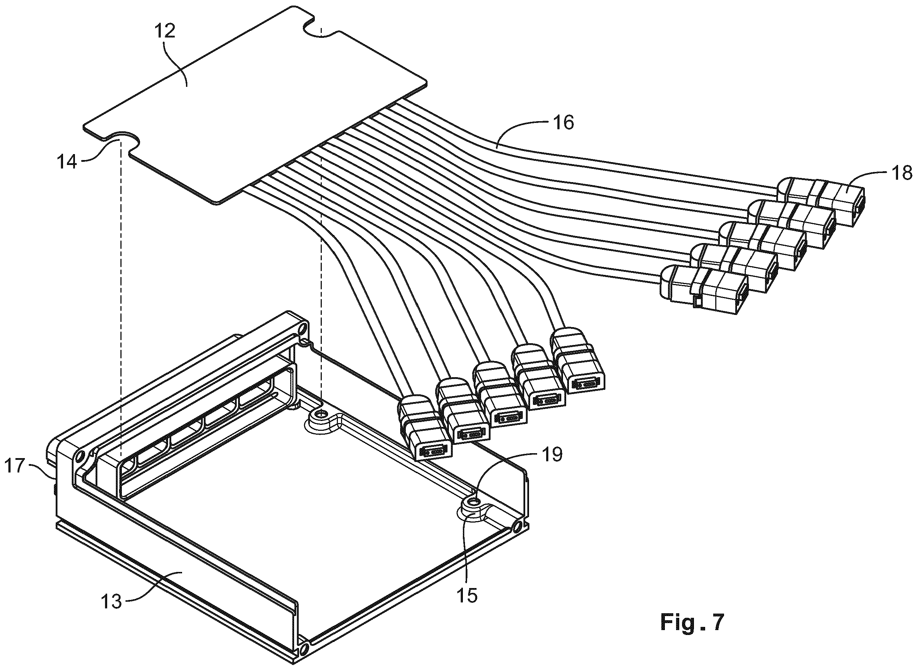

Fig. 7 shows the lower enclosure 13 of the enclosure of the present invention. It shows a fibre patch sheet 12 for enclosing ribbon cables 16 to be located in a base of the lower enclosure 13, remaining constrained in lateral movement.

Starting at the initial point of assembly, the fibre patch sheet 12 may be positioned in the base of the lower enclosure 13. Cut-outs 14 in the patch sheet, which correspond to the PCB enclosure bosses 15, may be used to locate the sheet in the base of the enclosure and constrain lateral movement once assembly is complete. Exemplarily, twenty ribbon cables 16 may extend from the edge of the patch sheet 12 furthest from the lower enclosure front side 17. Two ribbon cables may be terminated in each module component 18. The module component 18 may be referred to as module half. When the patch sheet 12 has been located, the ribbon cables 16 are laid flat extending out from the rear of the lower enclosure.

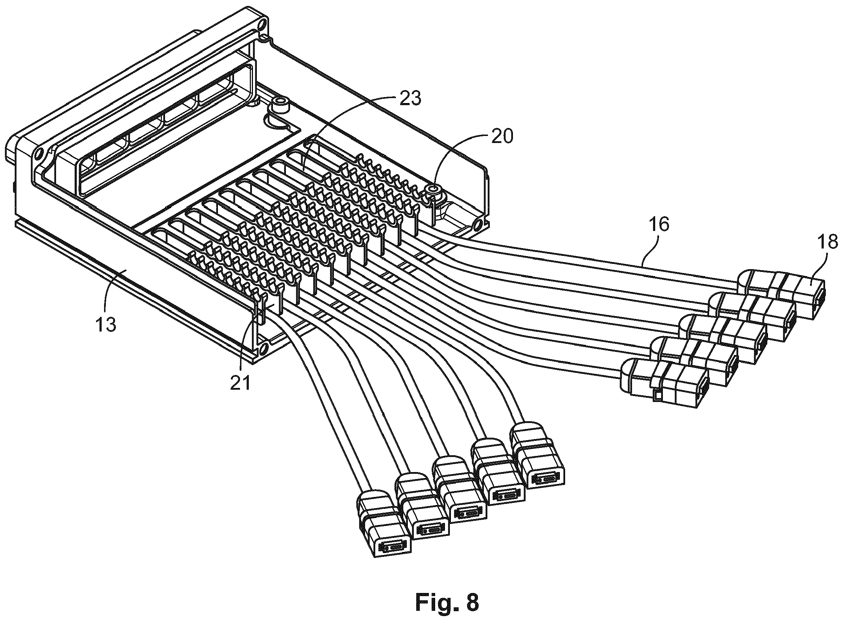

Exemplarily, the Figure shows third fixing means 19 for securing the reel holder assembly in the lower enclosure 13. The third fixing means may be PCB fixation holes 19 and four M3 screws 20 shown in Figure 8. When the reel holder assembly has been secured, the reel holder foam pad 3 clamps the fibre patch sheet 12 and constrains sheet movement in the vertical direction.

Optical cables, routed from different locations around the aircraft, may enter the enclosure via an 5-bay connector interface and ten fibre optic module components 18. Two module components, in other words module halves, can be installed in each of the five connector cavities, therefore each 5-bay connector shell can house ten fibre optic module components 18. The 5-bay connector interface may be a standard EN4165 5-bay connector interface. Twenty four optical fibres may terminate within each module component 18. Terminated fibres exiting the module components within the enclosure may come together as a collection of ribbon cables. Two ribbon cables, each containing twelve fibres, exit each module component 18. A total of twenty ribbon cables may extend from the module components 18 and are terminated along one edge of a fibre patch sheet 12. The patch sheet controls the routing of the fibres and can be configured to ensure fibres enter and exit the enclosure at defined connector positions.

Fig. 8 shows the lower enclosure 13 of the avionics enclosure with the reel holder assembly 1.

Exemplarily, it shows that before the reel holder assembly 1 is lowered into position for fixation, twenty ribbon cables 16 may exit the rear of the lower enclosure may be aligned with the ten channels 21 in the reel holder assembly i.e. two ribbon cables per channel 21. The width of each channel 21 may accommodate one ribbon cable width. As a result, one of the ribbon cables in each channel is positioned directly above the other. The two ribbon cables are terminated in the module component in this arrangement and may also enter/exit the fibre patch sheet 12 in this arrangement to aid fibre routing. Once the reel holder assembly has been secured, the ribbon cables 16 are aligned with each channel 21 by the ribs 22 on the reel holder which are brought into contact with the base of the lower enclosure. Ribs 22 may be referred to as protruding features. As well as aligning ribbon cables 16 for the next stage of the assembly process, the ribs also provide support for the reel holder legs 23 and protect against damage caused by mishandling.

Each channel 21 may exemplarily comprise eight first fixing means 25 for positioning each of the fibre reel assembly in six discrete positions with a spacing between each other.

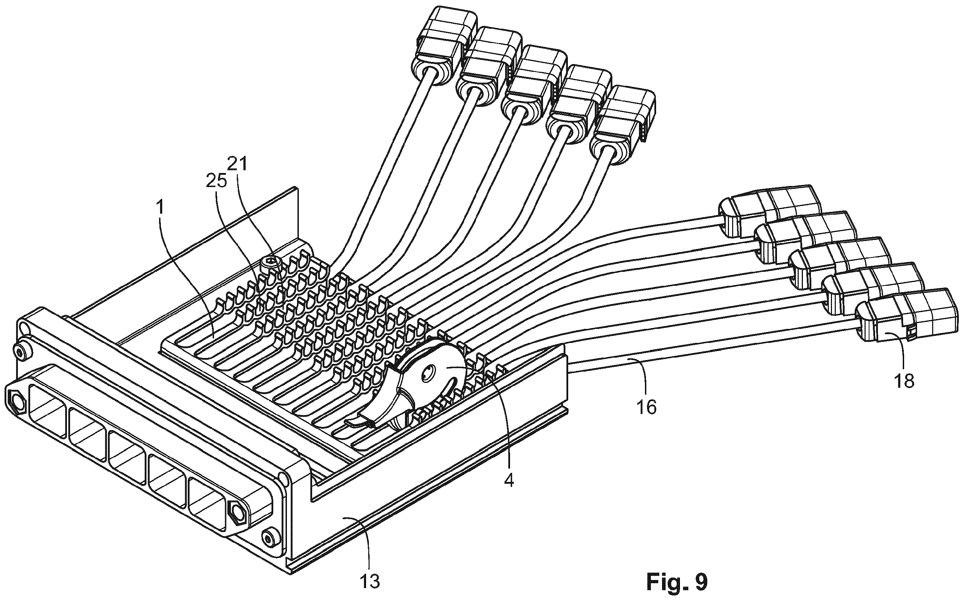

Fig. 9 shows the enclosure comprising the reel holder assembly 1 and one on the at least one fibre reel assemblies 4 secured in one of the channels 21 by engagement of the first fixing means 25 of the reel holder assembly with the second fixing means 24, 36 of the fibre reel assembly.

When the reel holder assembly 1 has been secured, the fibre reel assemblies 4 are installed. Viewing the front face of the lower enclosure, in the Figure the first reel assembly may be installed in the channel furthest to the right. Installation may involve inserting the second fixing means 24, 36 e.g. four cylindrical protrusions 24 on the locating reel component of the fibre reel assembly into the first fixing means e.g. snap features or in other words slots 25, in the reel holder assembly 2.

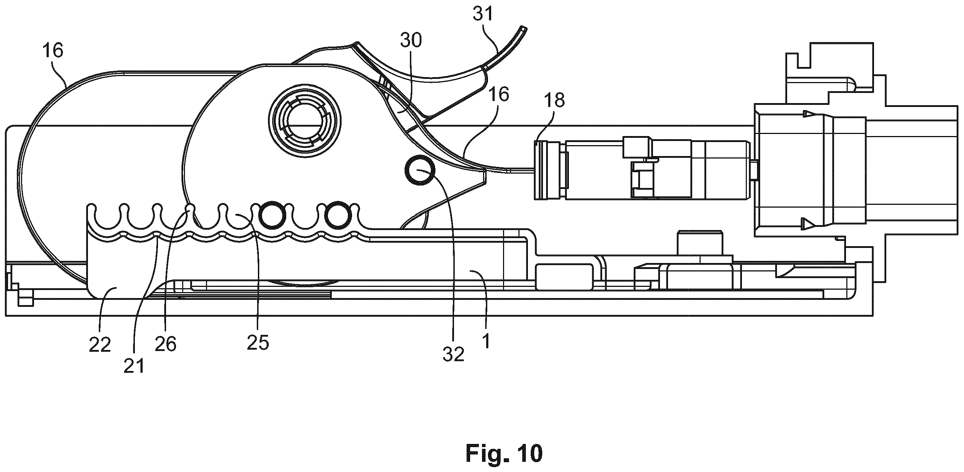

In each of the ten channels 21 of the reel holder assembly a module component 18 with its associated two ribbon cables 16 is located, for being lifted around the rear of one of the fibre reel assemblies 4 and inserted between the gap 30 (shown in Fig. 10). The two ribbon cables 16 remaining located in a locating reel component groove 31 and the module positioned in the gap between the fibre reel assembly and a connector shell.

Fig. 10 shows a rotation of the rotating reel component 6 relative to the locating reel component 5 following installation of at least one first fibre reel assembly 4 in the reel holder assembly, wherein the rotation creates a gap 30 between the surfaces of the locating reel component and the rotating reel component. The rotation is relative to the axis of rotation 27.

In each of the channels 21 of the reel holder assembly two ribbon cables are located, one above the other. A module component is associated to the two ribbon cables for being lifted around the rear side of one of the fibre reel assemblies 4 and inserted between the gap 30. The two ribbon cables 16 remaining located in a locating reel component groove 31 and the module component 18 positioned in the gap between the fibre reel assembly and a connector shell.

A detent protrusion on the rotating reel component 6 may be located in a depression 32 on the locating reel component 5 to provide a retention when the fibre reel assembly 4 is closed and to prevent the rotating reel component 6 from opening as a result of the load exerted by a fibre twist.

The first fixing means 26 on the reel holder assembly 1 may narrow their width at the point of entry. These features serve to lightly retain the fibre reel assembly within the reel holder assembly and prevent it from being dislodged during the fibre assembly process.

Exemplarily, the reel holder assembly may comprise 8 first fixing means to allow the fibre reel assembly to be positioned in six discrete positions with a spacing of 4mm between each position. Each fibre reel assembly may be located in six positions, starting closest to the front of the enclosure and moving backwards. According to an advantageous example, the positions may be defined by the protrusions on fibre reel assemblies locating in the corresponding slots in the reel holder. For example the protrusions on the fibre reel assemblies may have a diameter of 3mm and the slots may have a diameter of 3.2mm. Other diameters are also possible. The fibre reel assembly may be installed in the position closest to the front face of the lower enclosure at the first stage of the process.

The Figures shows that following installation of the first fibre reel assembly in the reel holder assembly, the rotating reel component may be rotated through thirty degrees relative to the locating reel component. However other rotations of other angles are also possible. The fibre reel assembly snap detail may provide the axis of rotation 27. A slot 28 in the rotating reel component may control the degree of allowable rotation and the cylindrical protrusions on the locating reel component may function as stop surfaces. The protruding arm 29 on the rotating reel component can be pinched with two fingers and pulled vertically to aid this process. The rotation creates a gap 30 between the surfaces of the locating reel component and rotating reel component. The gap may be of approximately 1.2mm.

The module component 18 and associated ribbon cables 16, located in the applicable reel holder channel, can be lifted around the rear of the fibre reel assembly 4 and inserted between this gap. The two ribbon cables may be located in the locating reel component groove 31 and the module may be positioned in the gap between the fibre reel assembly and connector shell. Depending on the length of the ribbon cables, there may be a length of unsupported fibre ribbon cable/s extending from the back of the fibre reel assembly.

The fibre module may then rotated, inducing a 90-degree twist in the ribbon cables, and inserted into the appropriate connector bay. Other degree twists are also possible. The rotating reel component 6 may then be rotated thirty degrees in the opposite direction to close the fibre reel assembly and secure the fibre ribbon cables within. Other degree rotations are also possible. A small detent protrusion on the rotating reel component may be located in a small depression 32 on the locating reel component to provide a light retention when the fibre reel assembly is closed. The detent feature provides sufficient retention to prevent the rotating reel component from opening as a result of the load exerted by the fibre twist.

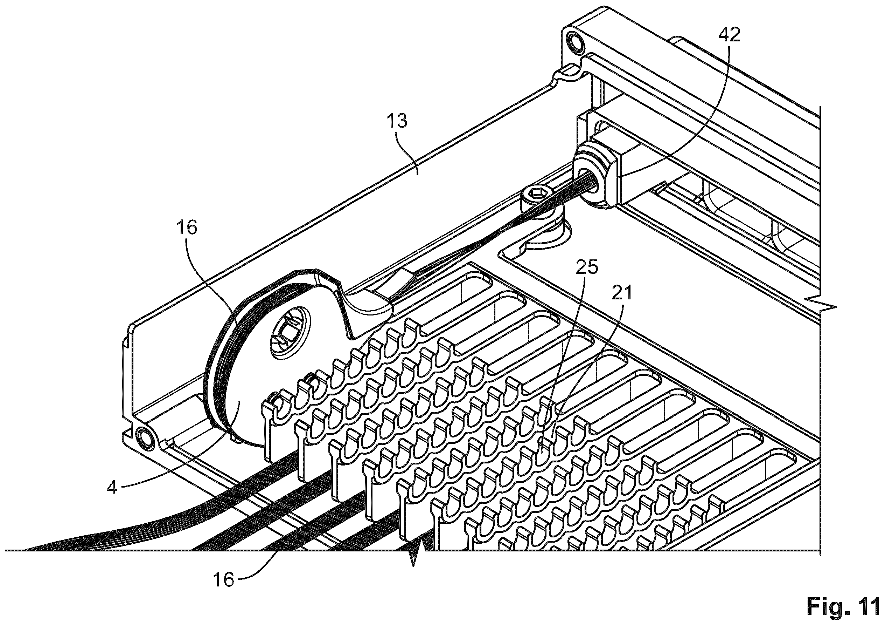

Fig. 11 shows that once the module has been secured, the fibre reel assembly can be lifted from the furthest forward position and moved backwards to constrain the unsupported fibre ribbon cable length, if any exists. This adjustment accommodates the potential for repair of individual fibre ribbons in the event damage occurs. If module halves need to be re-terminated, the design can cope with the resultant ribbon cable length variation without impacting routing negatively.

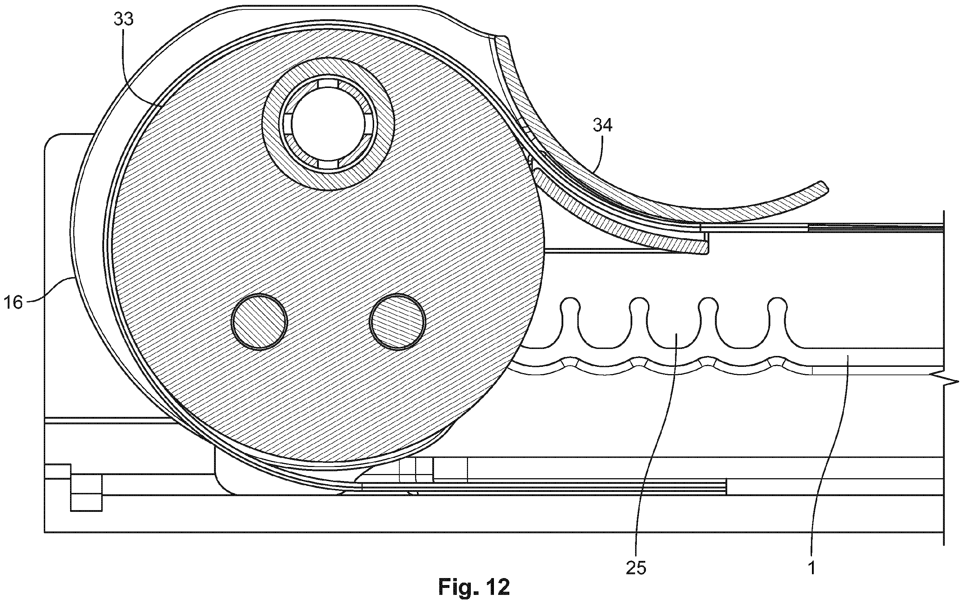

Fig. 12 shows a peripheral region 33 of the reel foam cushion 7. The radius of the peripheral region 33 of the reel foam cushion and a surface 34 of the rotating reel component arranged to contact a fibre cable, predetermined to ensure that a fibre minimum bend radii are not contravened, when fibre cables remain in contact around the diameter of the reel foam cushion. The peripheral region 33 of the reel foam cushion is used to locate, maintain bend radii and provide damping of fibres under vibration.

Following the positional adjustment of the fibre reel assembly, the fibre cables are in light contact around the diameter of the reel foam cushion. Exemplarily, the radius of the peripheral region 33 of the reel foam cushion and the surface 34 of the rotating reel component contacting the fibre may be 12.5mm to ensure fibre minimum bend radii are not contravened.

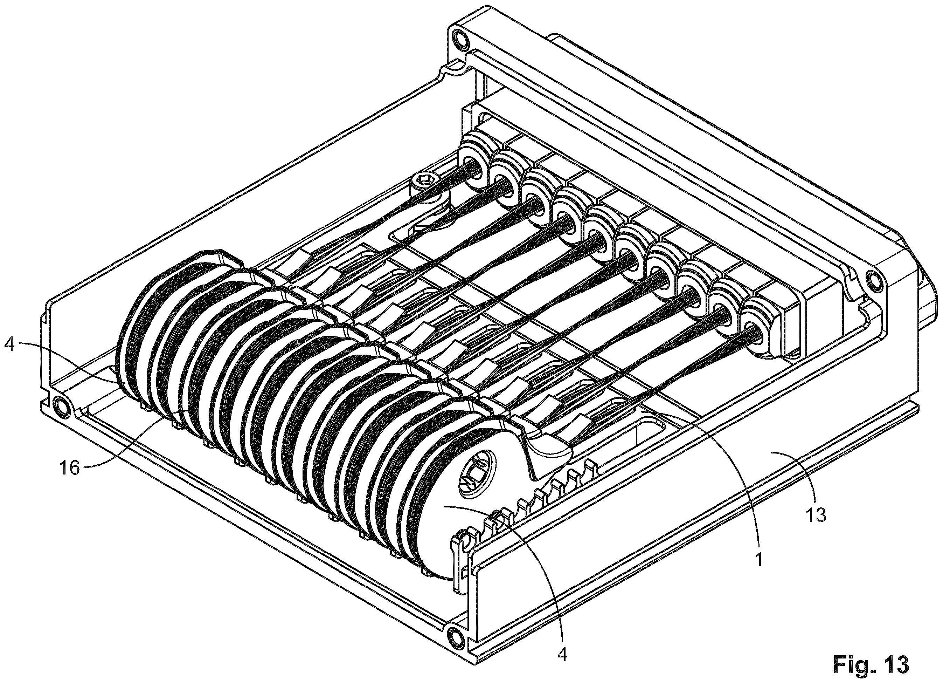

Fig. 13 shows that the fibre reel assembly process may then be repeated in the adjacent channel and then again until all channels are installed with a fibre reel assembly.

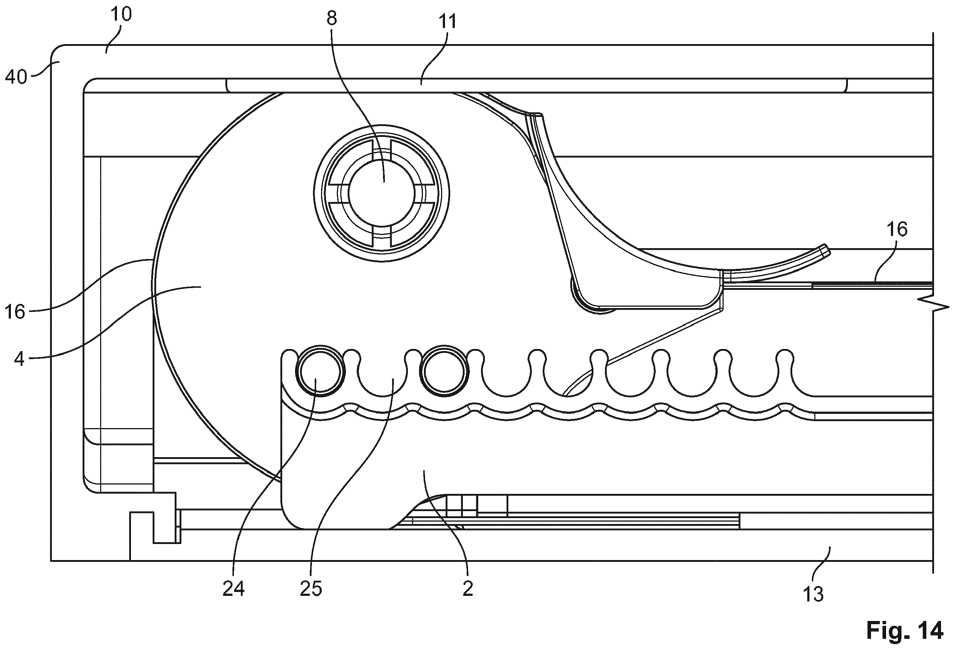

Fig. 14 shows a cross section of the enclosure with the upper enclosure 10 installed. When all fibre reel assemblies have been installed and positions adjusted appropriately, the upper enclosure 10 can be installed. When secured, the flat surfaces on top of the fibre reel assemblies 4 compress the foam pad 11. This removes clearance between the assembled components and provides clamping of the fibre reel assemblies. The thickness of the foam pad is such that it does not clamp fibres wrapped around the fibre reel assemblies. All foam components provide damping of the internal optics against shocks and vibration.

**REFERENCE NUMERALS**

| **Reference Numeral** | **Description** |
|---|---|
| 1 | Reel holder assembly |
| 2 | Reel holder |
| 3 | Reel holder foam pad |
| 4 | Fibre reel assembly |
| 5 | Locating reel component |
| 6 | Rotating reel component |
| 7 | Reel foam cushion |
| 8 | Snap feature |
| 9 | Hole on the locating reel component |
| 10 | Upper enclosure |
| 11 | Foam pad |
| 12 | Fibre patch sheet |
| 13 | Lower enclosure |
| 14 | Cut-outs on the fibre patch sheet |
| 15 | PCB enclosure bosses |
| 16 | Ribbon cables |
| 17 | Front face of the lower enclosure |
| 18 | Module component |
| 19 | Third fixing means |
| 20 | Third fixing means |
| 21 | Channels |
| 22 | Rib |
| 23 | Reel holder legs |
| 24 | Second fixing means |
| 25 | First fixing means |
| 26 | First fixing means, snap means |
| 27 | Axis of rotation |
| 28 | Slot in the rotating reel component |
| 29 | Protruding arm on the rotating reel component |
| 30 | Gap |
| 31 | Locating reel component groove |
| 32 | Depression on the locating reel component |
| 33 | Peripheral region of the reel foam cushion |
| 34 | Surface contacting the ribbon cable |
| 36 | Second fixing means |
| 38 | Second fixing means |
| 40 | Enclosure |
| 42 | Connector bay |

## Claims

1. Reel holder assembly (1) for an avionics enclosure, the reel holder assembly having a front side, a rear side, an upside and a downside and comprising;
a reel holder (2) comprising at least one channel (21) defined by two ribs (22) for guiding a ribbon cable, the channel (21) extending from the front side to the rear side;
wherein each rib comprises first fixing means (25) for engaging with a fibre reel assembly (4);
a reel holder foam pad (3) fixed to a downside surface of the reel holder (2), wherein the downside surface can be mounted to the avionics enclosure.

2. Reel holder assembly according to claim 1 wherein the first fixing means (25) comprise a plurality of fixing elements arranged along the channel (21) for positioning of the fibre reel assembly in a plurality of different discrete positions with a spacing between each other.

3. Fibre reel assembly (4) for engaging with the reel holder assembly (1) of any of claims 1-2, the fibre reel assembly comprising:
a locating reel component (5) secured to a rotating reel component (6);
second fixing means (24, 36) for engaging with the first fixing means (25) of the reel holder assembly (1).

4. Fibre reel assembly (4) according to claim 3, further comprising:
a reel foam cushion (7) between the locating reel component and the rotating reel component.

5. Fibre reel assembly (4) according to claim 4:
wherein the reel foam cushion (7) is inserted in the locating reel component (5) and wherein the locating reel component (5) and the rotating reel component (6) are secured together by means of a snap feature (8) which constrains the reel foam cushion.

6. Fibre reel assembly (4) according to any of claims 3-5 wherein the fibre reel assembly (4) comprises an axis of rotation (27) for rotation of the rotating reel component (6) relative to the locating reel component (5), the rotation creating a gap (30) between surfaces of the locating reel component and the rotating reel component.

7. Enclosure (40) comprising the reel holder assembly (1) according to any of claims 1-2 and comprising at least one fibre reel assembly (4) according to any of claims 3-6, secured in the at least one channel (21) of the reel holder assembly (1) by engagement of the first fixing means (25) of the reel holder assembly (1) with the second fixing means (24, 38) of the fibre reel assembly.

8. Enclosure (40) according to claim 7 further comprising:
an upper enclosure (10) and a lower enclosure (13) comprising a base;
a foam pad (11) fixed to the upper enclosure (10), the foam pad (11) having a predetermined thickness such that it provides damping of the internal optics of the ribbon cable against shocks and vibration upon the upper enclosure (10) being secured;
a fibre patch sheet (12) for jacketing ribbon cables, located in the base of the lower enclosure (13);
wherein the reel holder assembly (1) is secured in the base of the lower enclosure (13) by third fixing means (19, 20) such that the reel holder foam pad (3) clamps the fibre patch sheet (12).

9. Enclosure according to claim 8:
wherein the second fixing means (24, 38) of the fibre reel assembly (4) comprise cylindrical protrusions (24, 38) on the locating reel component (5) for being inserted into the first fixing means (25) of the reel holder assembly (1); and/or
comprising at least one module (18) associated to two ribbon cables (16) for being lifted around a rear side of the fibre reel assembly and inserted between a gap created by rotation (27) of the rotating reel component (6) relative to the locating reel component (5).

10. Enclosure according to any of claims 7-9 wherein the reel holder assembly (1) comprises ten channels (21) and the fibre patch sheet (12) encloses twenty ribbon cables (16) aligned within the ten channels (21), each channel enclosing two ribbon cables one fitted above the other.

11. Method of assembling the enclosure according to any of claims 7-10, the method comprising the following steps:
positioning the fibre patch sheet (12) jacketing the at least two ribbon cables on the base of the lower enclosure (13), the two ribbon cables remaining extending from an edge of the fibre patch sheet furthest from a front face (17) of the lower enclosure;
positioning the at least two ribbon cables extending out from a rear end of the lower enclosure, aligned within the at least one channel (21) in the reel holder assembly;
locating and securing the reel holder assembly (1) according to any of claims 1-2 in the lower enclosure (13) such that the reel holder foam pad (3) clamps the fibre patch sheet (12);
once the reel holder assembly has been secured, the ribbon cables remain within the at least one channel on the reel holder;
securing the at least one fibre reel assembly according to any of claims 5-7 in the at least one channel (21) of the reel holder assembly by inserting the second fixing means (24) on the locating reel component into the first fixing means (25) of the reel holder assembly.

12. Method according to claim 11 further comprising:
following securing of at least one first fibre reel assembly (4) in the reel holder assembly (1), rotating the rotating reel component (6) relative to the locating reel component (5), the fibre reel assembly snap detail providing the axis of rotation (27), the rotation creating a gap (30) between the surfaces of the locating reel component and rotating reel component;
lifting a module component (18) comprising two associated ribbon cables (16), located in the at least one reel holder channel (21), around a rear of the fibre reel assembly and inserting it between the gap (30);
rotating the module component (18) inducing a twist in the two ribbon cables (16) and inserting it into an associated connector bay (42);
rotating the rotating reel component (6) in the opposite direction to close the fibre reel assembly (4) and secure the fibre ribbon cables (16) within;
when the at least one first fibre reel assembly (4) has been secured, securing the upper enclosure (10) so that when secured, flat surfaces on top of the fibre reel assembly (4) compress the rectangular foam pad (11).

13. Method according to claim 12, further comprising, after rotating the rotating reel component (6) in the opposite direction, the step of:
moving the at least one fibre reel assembly (4) from one of the first fixing elements to another first fixing element closer to the rear side to constrain unsupported fibre ribbon cable (16) length; and/or
repeating the fibre reel assembly process in all the channels (21).

14. Method according to any of claims 9-13 wherein the step of positioning the at least two ribbon cables extending out of the rear end of the lower enclosure, aligned with the at least one channel comprises positioning twenty ribbon cables exiting the rear end of the lower enclosure aligned with ten channels (21) in the reel holder assembly (1), wherein in each channel one of the two ribbon cables is positioned above the other.

15. Method according to any of claims 11-14 wherein a first fibre reel assembly is installed in the channel furthest to the right or to the left when viewing the reel holder assembly from the front face of the lower enclosure, and the fibre reel assembly steps of claim 12 are repeated in remaining nine adjacent channels until all channels are installed with a fibre reel assembly.
